Europäisches Patentamt

European Patent Office

Office européen des brevets

(19)

(11) Veröffentlichungsnummer: **0 089 518**
**B1**

(12)

# EUROPÄISCHE PATENTSCHRIFT

(45) Veröffentlichungstag der Patentschrift:
**19.06.85**

(21) Anmeldenummer: **83101953.4**

(22) Anmeldetag: **28.02.83**

(51) Int. Cl.⁴: **A 23 K 3/00,** A 23 K 3/03, A 23 K 3/04

(54) **Verfahren zur Konservierung von Futtermitteln durch Silieren.**

(30) Priorität: **05.03.82 DE 3208020**

(43) Veröffentlichungstag der Anmeldung:
**28.09.83 Patentblatt 83/39**

(45) Bekanntmachung des Hinweises auf die Patenterteilung:
**19.06.85 Patentblatt 85/25**

(84) Benannte Vertragsstaaten:
**AT BE CH DE FR GB LI NL**

(56) Entgegenhaltungen:
**Keine**

(73) Patentinhaber: **Beumker, Theodor, Sudenholz 2,
D-4724 Wadersloh (DE)**

(72) Erfinder: **Beumker, Theodor, Sudenholz 2,
D-4724 Wadersloh (DE)**

(74) Vertreter: **Strehl, Peter, Dipl.-Ing. et al, Strehl,
Schübel-Hopf, Schulz Patentanwälte
Widenmayerstrasse 17 Postfach 22 03 45,
D-8000 München 22 (DE)**

## Beschreibung

Die Erfindung betrifft ein Verfahren zur Konservierung von stärkehaltigen Futtermitteln durch Silieren, bei dem die Futtermittel in an sich üblicher Weise zerkleinert, in einen Silo eingebracht und dort der Gärung unterworfen werden.

Zur Herstellung von Silofutter hat man vor allem Grünfutter zerkleinert, gegebenenfalls mit üblichen Zusätzen für die Silierung versehen und in möglichst luftdicht gebaute Silos eingebracht. Unter möglichst weitgehendem Ausschluß von Luftsauerstoff erfolgt im Silo eine Milchsäuregärung, die den Futtermitteln einen sauren pH-Wert verleiht und dadurch eine Konservierung verursacht.

In jüngerer Zeit ist man verschiedentlich dazu übergegangen, auch besonders stärkehaltiges Futtermittel, wie Rüben und insbesondere Mais und Getreide, durch Silieren haltbar zu machen. Zur Vorbereitung für die Silierung werden die Getreidearten, wie auch Mais, durch Mahlen zerkleinert und nach der Zerkleinerung in den Silo eingebracht.

Bei der Beschickung des Silos mit Getreide treten jedoch außerordentliche Schwierigkeiten auf, weil derartige hochstärkehaltige Futtermittel nicht pumpfähig sind. Dies hat einerseits zur Folge, daß eine kontinuierliche Beschickung der Silos und eine entsprechende kontinuierliche Entnahme des silierten Futtermittels nicht möglich ist und daß andererseits im Silo futtermittelfreie Hohlräume gebildet werden, in die Luftsauerstoff eindringt, der eine unerwünschte Buttersäuregärung bewirkt.

Der Erfindung liegt die Aufgabe zugrunde, ein Verfahren zur Silierung zur Verfügung zu stellen, welches die kontinuierliche und hohlraumfreie Beschickung des Silos sowie die kontinuierliche Entnahme der vergorenen Futtermittel aus dem Silo ermöglicht, ohne daß zusätzliche Vorrichtungen außer den üblichen Pumpvorrichtungen angewendet werden müssen.

Gegenstand der Erfindung ist ein Verfahren zur Konservierung von stärkehaltigen Futtermitteln durch Silieren, bei dem die Futtermittel zerkleinert, in einen Silo eingebracht und dort der Gärung unterworfen werden, das dadurch gekennzeichnet ist, daß man die Futtermittel vor oder während des Einbringens in den Silo mit Wasser oder wäßrigen Flüssigkeiten bis zu einem Gesamtfeuchtigkeitsgehalt, der den Futtermitteln Pumpfähigkeit verleiht, der jedoch einen Wert von 75 Gew.-% nicht überschreitet, versetzt.

Bei dem erfindungsgemäßen Verfahren werden die Futtermittel, wie Mais und Getreide, zunächst durch Mahlen zerkleinert, was mit Hilfe üblicher Methoden erfolgen kann.

Das Mahlgut wird dann in einer Mischvorrichtung, beispielsweise einer Förderschnecke, mit Wasser oder der wäßrigen Flüssigkeit vermischt und das erhaltene homogene Gemisch wird unmittelbar in den Silo eingebracht. Bei Verwendung einer Förderschnecke können das Mahlgut und das Wasser gesondert der Schnecke zugeführt werden.

Gemäß einer anderen Ausführungsform wird das Wasser beim Mahlen des Futtermittels der Mahlvorrichtung zugesetzt. Dies kann insbesondere dann erfolgen, wenn der Wassergehalt des Mahlguts bereits relativ hoch ist. In jedem Fall wird Wasser in einer solchen Menge zugesetzt, daß das mit Wasser gemischte vermahlene Futtermittel pumpfähig wird. Ein bevorzugter Gesamtfeuchtigkeitsgehalt liegt im Bereich von 50 bis 75 Gew.-%.

Anstelle von Wasser kann auch eine wäßrige Flüssigkeit verwendet werden, beispielsweise Molke.

Geeignet ist außerdem eine wäßrige Lösung, der übliche Zusätze für die Silierung zugesetzt wurden.

Das erfindungsgemäße Verfahren läßt sich mit besonderem Vorteil zur Silierung von Getreide- und Maisschrot anwenden.

Während vermahlenes Getreide nach bisher üblichen Methoden nur sehr schwierig zu transportieren und in den Silo einzubringen war, wird erfindungsgemäß die kontinuierliche Zuführung des Getreide- und Maisschrots in den Silo sowie die kontinuierliche Entnahme des vergorenen Getreideschrots in einfacher Weise mit üblichen Pumpvorrichtungen ermöglicht. Durch die gute Fließfähigkeit wird der Silo dicht und hohlraumfrei gefüllt und auf diese Weise der Luftausschluß gewährleistet. Dies hat zur Folge, daß die erwünschte Milchsäuregärung auftritt, ohne daß unerwünschte Nebengärungen in erheblichem Umfang stattfinden.

Das erfindungsgemäße Verfahren läßt sich besonders vorteilhaft unter Anwendung eines Silos durchführen, der von unten beschickt wird und aus dem die Entnahme ebenfalls von unten über ein Steigrohr erfolgt. Erfindungsgemäß ist auch die Anwendung eines solchen Silos die kontinuierliche Beschickung und kontinuierliche Entnahme mit Hilfe üblicher Pumpvorrichtungen möglich.

Bei Anwendung des erfindungsgemäßen Verfahrens wird, aufgrund der höheren Dichte der Silobeschickung und der höheren Feuchtigkeit, eine raschere und weitgehendere Milchsäuregärung bis zu einem relativ sauren pH-Wert von 4 bis 5 ermöglicht.

## Patentansprüche

1. Verfahren zur Konservierung von stärkehaltigen Futtermitteln durch Silieren, bei dem die Futtermittel zerkleinert, in einem Silo eingebracht und dort der Gährung unterworfen werden, dadurch gekennzeichnet, daß man die Futtermittel vor oder während des Einbringens in den Silo mit Wasser oder wäßrigen Flüssigkeiten bis zu einem Gesamtfeuchtigkeitsgehalt, der den Futtermitteln Pumpfähigkeit verleiht, der jedoch einen Wert von 75 Gew.-% nicht überschreitet, versetzt.

2. Verfahren nach Anspruch 1, dadurch gekennzeichnet, daß man den Feuchtigkeitsgehalt auf einen Wert im Bereich von 50 bis 75 Gew.-% Gesamtfeuchtigkeit einstellt.

3. Verfahren nach Anspruch 1 oder 2, dadurch gekennzeichnet, daß man als Futtermittel Getreide- bzw. Maisschrot einsetzt.

4. Verfahren nach einem der Ansprüche 1 bis 3, dadurch gekennzeichnet, daß man das Vermischen der zerkleinerten Futtermittel mit Wasser oder der wäßrigen Flüssigkeit durch gleichzeitiges Einleiten der Futtermittel und des Wassers in eine Förderschnecke durchführt.

## Claims

1. Process for the conservation of amylaceous fodder by ensilage comprising shredding the fodder and introducing it into a silo, where it is subjected to fermentation, characterized in that prior to or during the introduction into the silo the fodder is added with water or a aqueous liquids to achieve a total moisture content which makes the fodder pumpable, which, however, does not exceed a value of 75% by weight.

2. Process according to claim 1, characterized in that the moisture content is set to a value in the range of from 50 to 75% by weight as the total moisture content.

3. Process according to claim 1 or 2, characterized in that as a fodder there are used crushed cereals or crushed corn, respectively.

4. Process according to any of the claims 1 to 3, characterized in that the shredded fodder is mixed with water or the aqueous liquid by simultaneously introducing the fodder and the water into a screw conveyor.

## Revendications

1. Procédé de conservation de fourrage farineux par ensilage, dans lequel le fourrage est fragmenté, et mis en place dans un silo où il est soumis à une fermentation, caractérisé par le fait qu'avant ou pendant la mise en place dans le silo on additionne le fourrage d'eau ou de liquide aqueux jusqu'à une teneur totale en humidité qui permet au fourrage d'être pompé mais qui ne dépasse cependant pas une valeur de 75% en poids.

2. Procédé selon la revendication 1, caractérisé par le fait que l'on règle la teneur en humidité à une valeur dans la plage de 50 à 75% en poids d'humidité totale.

3. Procédé selon la revendication 1 ou 2, caractérisé par le fait que l'on utilise comme fourrage des céréales ou du maïs haché.

4. Procédé selon l'une des revendications 1 à 3, caractérisé par le fait que l'on réalise le mélange du fourrage fragmenté avec de l'eau on un liquide aqueux en introduisant simultanément le fourrage et l'eau dans un convoyeur à vis.